# EUROPEAN PATENT SPECIFICATION

(11) **EP 2 423 653 B1**
(45) Date of publication and mention of the grant of the patent: **10.04.2013**
(21) Application number: 11178164.7
(22) Date of filing: 19.08.2011
(51) Int. Cl.: G01G 19/04, B65G 67/50

(54) **Rotary rail car dumper load weighing system**
System zum Wiegen der Ladung eines drehbaren Eisenbahnwagenkippers
Système rotatif de pesée de charge de benne de wagon de chemin de fer

(30) Priority: 31.08.2010 US 872390
(43) Date of publication of application: 29.02.2012
(73) Proprietor: Metso Minerals Industries, Inc., Waukesha, WI 53186 (US)
(72) Inventor: Insana, Samuel, Washington, PA 15301 (US); Smith, Kent, North Vancover, British Columbia V7R 1S2 (CA); Prince-Wright, Peter, Coquitlam, British Columbia V3E 0E1 (CA)
(74) Representative: Brunner, John Michael Owen

(56) References cited:
- US-A- 3 373 829
- US-B1- 7 196 277

## Description

The present disclosure generally relates to a weighing system for a rotary rail car dumper. More specifically, the present disclosure relates to a weighing system that includes a weight gauge associated with each of the trunnions of the rotary rail car dumper to weigh a rail car positioned on the rotary rail car dumper.

Presently, systems exist to rapidly unload the contents of a rail car. The systems typically include a device for inverting one or more rail car bodies to discharge the contents of the body into a suitable hopper for further handling. One such rotary rail car dumper is available from Metso Minerals Industries, Inc. In currently available rotary rail car dumpers, a device is included within a dumper to weigh the rail car before and after the material has been discharged. The difference between the determined weights allows the weighing system to determine the weight of the material dumped from the rail car.

Present weighing systems utilized with rotary rail car dumpers include weighing devices associated with the support rails that receive the rail car prior to dumping. One such weighing system is described in US Patent 3,373,829 (R.W. Suman et al.). Although these weighing systems function well to determine the weight of the material being discharged, the weighing systems are typically complicated and increase the cost and complexity of the rotary rail car dumper.

### SUMMARY OF THE INVENTION

The present disclosure generally relates to a weighing system for a rotary rail car dumper. The rotary rail car dumper includes a rotatable frame assembly that includes a pair of support rails for receiving the rail car to be weighed and a pair of rotatable end rings. When the rail car is to be emptied, the entire frame assembly is rotated about the pair of rotatable end rings.

The frame assembly includes at least two trunnions that are positioned to rotatably support each of the end rings. Each of the trunnions includes support wheels that are mounted within a wheel bracket. The weight of the rotatable frame assembly and the rail car creates a force along the radius of the end rings that is opposed by each of the trunnions.

The weighing system further includes a weight gauge associated with each of the trunnions. The weight gauge is positioned such that the force applied to each of the trunnions by the combined weight of the frame assembly and the rail car is detected by the weight gauge. The weight gauge generates an electrical signal based upon the force applied to the trunnion.

In one embodiment, each of the weight gauges is a strain gauge positioned such that the strain gauge contacts a pivot pin of the trunnion. The entire force felt by each of the trunnions is applied to the strain gauge such that the strain gauge generates an electrical signal related to the applied force.

A control unit of the weighing system receives the electrical signals from each of the strain gauges. The control unit calculates the weight seen by the combination of the trunnions based upon the value of the electrical signals received from the strain gauges. The control unit determines the weight of the rail car when the rail car is loaded with material and subtracts the weight of the rail car once the material has been dispensed. The difference between these two weights is the weight of the material that was stored within the rail car.

Various other features, objects and advantages of the invention will be made apparent from the following description taken together with the drawings.

### BRIEF DESCRIPTION OF THE DRAWINGS

The drawings illustrate one mode contemplated of carrying out the present disclosure. In the drawings:

Fig. 1 is a front view of a rotary rail car dumper of the present disclosure;

Fig. 2 is an end view of the rotary rail car dumper;

Fig. 3 is a magnified view of one of the trunnions as identified by line 3-3 of Fig. 2;

Fig. 4 is a perspective view of one of the trunnions in which the support wheels have been removed;

Fig. 5 is a section view taken along line 5-5 of Fig. 4;

Fig. 6 is a schematic illustration of the control unit that receives signals from each of the strain gauges and determines the weight of the rail car; and

Fig. 7 is a perspective view of a second embodiment of the trunnion shown in Fig. 4.

### DETAILED DESCRIPTION OF THE INVENTION

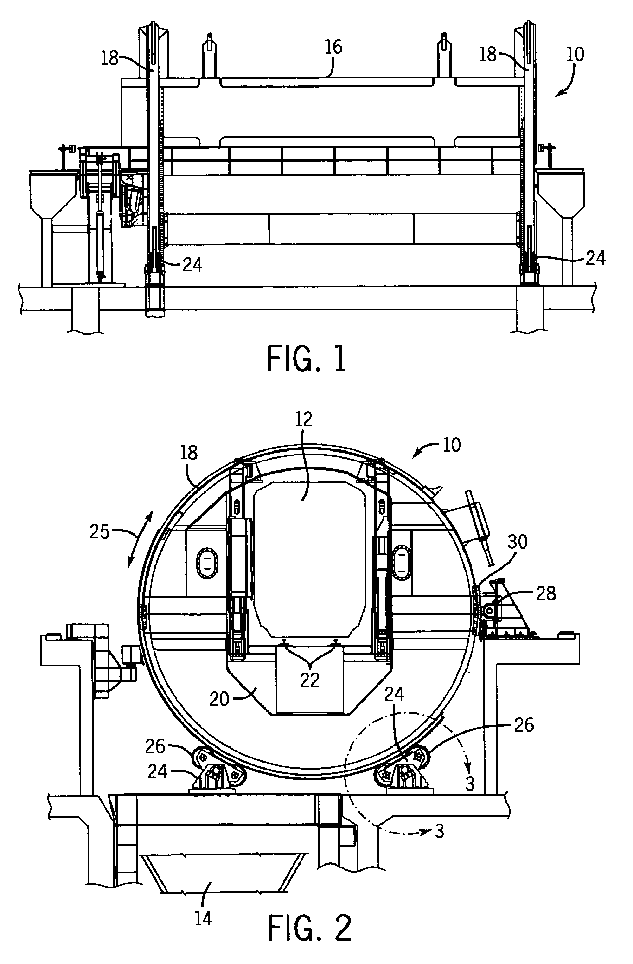

Figs. 1 and 2 illustrate a rotary rail car dumper constructed in accordance with the present disclosure. The rotary rail car dumper receives a rail car 12. The rail car 12 is typically filled with material and the rotary rail car dumper is used to first weigh the combination of the rail car and material prior to dumping the material into a collection bin 14. The rotary rail car dumper 10 generally includes a frame assembly 16 that supports the weight of the rail car 12 and allows the rail car 12 to be tipped to dispense the material contained within the rail car 12. The frame assembly 16 includes a pair of end rings 18 to which a rail car support platform 20 is mounted. The rail car support platform 20 includes a pair of support rails 22 that allow the rail car 12 to be rolled onto the support platform 20.

As illustrated in Fig. 1, each of the end rings 18 are positioned on opposite ends of the frame assembly 16. Each end ring 18 has a circular configuration and is supported by a pair of trunnions 24, as shown in Fig. 2. The trunnions 24 contact the end ring 18 and support the entire weight of the entire frame assembly 16 and the rail car 12 when the rail car 12 is positioned on the support rails 22. The trunnions 24 shown in Fig. 2 each include a pair of support wheels 26 that allow the trunnions 24 to both support the weight of the frame assembly 16 and allow the end rings 18 to rotate as shown by arrow 25. The rotation of each of the end rings is controlled by a drive motor 28 that engages a tooth gear mounted to at least a portion of each of the end rings 18. Alternatively, a chain system could be used to rotate the frame assembly 16 about the end rings 18.

As can be understood in Figs. 1 and 2, the rotary rail car dumper 10 of the present disclosure includes four separate trunnions 24 that combine to support the entire weight of the frame assembly 16 and the rail car 12.

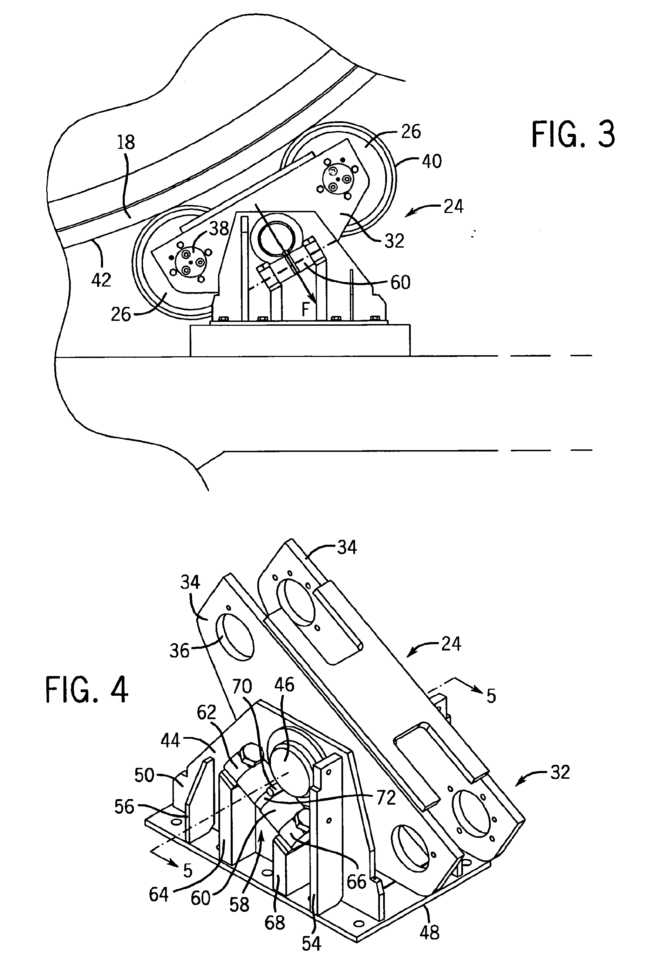

Fig. 3 illustrates the configuration of one of the trunnions 24. As shown in Fig. 3, the trunnion 24 includes a pair of support wheels 26 that are each rotatably mounted within a wheel bracket 32. Although a pair of support wheels 26 are shown in the drawing figures, each of the trunnions 24 could have one, two, three or even four support wheels while operating within the scope of the present disclosure. As illustrated in Fig. 4, the wheel bracket 32 includes a pair of spaced side plates 34 that each include an axle opening 36 that receives one end of a wheel axle 38 (Fig. 3). When each of the support wheels 26 are mounted to the wheel bracket 32, the outer surface 40 of each of the support wheels 26 contacts an outer edge surface 42 of the end ring 18. As previously described, the pair of trunnions 24 positioned at each end of the frame assembly for the rotary rail car dumper support the entire weight of the frame assembly and rail car while allowing the end rings 18 to rotate.

As illustrated in Fig. 3, the combined weight of the frame assembly and the rail car exerts a force on the trunnion 24 that can be represented by a vector F. The force vector F shown in Fig. 3 extends along the radius of the circular end ring 18. A similar force vector F is seen and opposed by each of the trunnions 24 positioned at the opposite ends of the frame assembly. The force vector F has both vertical and horizontal components due to the offset position of the trunnion 24 relative to the vertical centerline passing through each of the end rings 18.

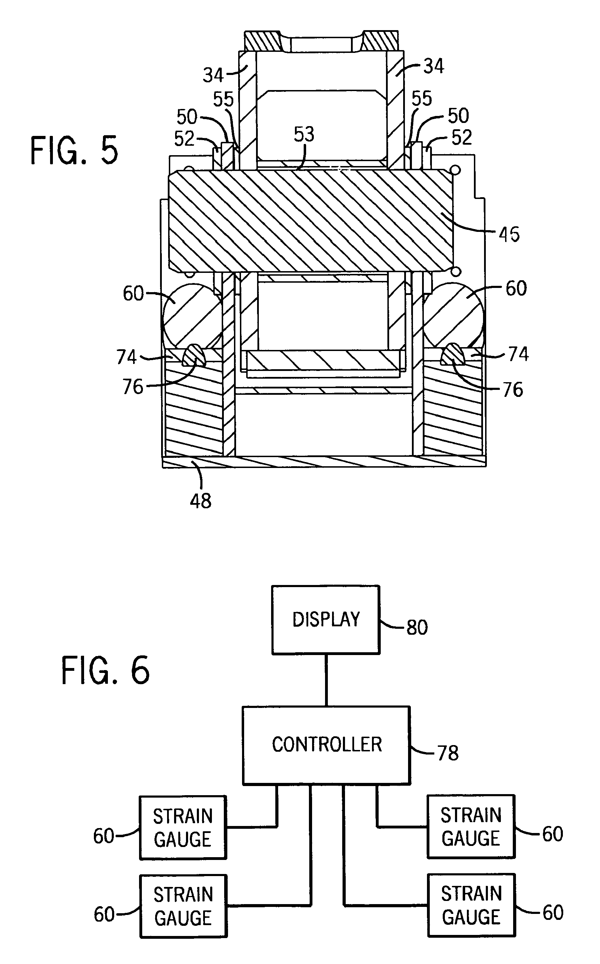

Referring back to Fig. 4, the wheel bracket 32 is pivotally mounted to a stationary support bracket 44 by a pivot pin 46. The support bracket 44 includes a generally horizontal base plate 48 and a pair of generally vertical support plates 50 positioned on opposite sides of the wheel bracket 32. As illustrated in Fig. 5, the pivot pin 46 passes through aligned openings formed in the support plates 50. A flange 52 is attached to the pivot pin 46 on each end to prevent the pivot pin 46 from sliding out of the openings formed in the vertical support plates 50.

As illustrated in Fig. 5, each of the side plates 34 are positioned in contact with an outer surface 53 of the pivot pin 46 such that the entire wheel bracket 32 can pivot relative to the stationary support bracket 44. A spacer 55 is positioned between each of the vertical support plates 50 and the spaced side plates 34 to prevent the side plates 34 from contacting the vertical support plates 50.

Referring back to Fig. 4, the support bracket 44 includes a pair of brace 54, 56 to provide additional support for the vertical support plate 50. The braces 54, 56 are preferably welded to both the base plate 48 and the corresponding support bracket 44. However, other configurations are contemplated as being within the scope of the present disclosure.

Referring back to Fig. 4, each of the trunnions includes a weight gauge 58 positioned to measure the force pushing on the trunnion 24 due to the weight of the frame assembly and rail car. The weight gauge 58 functions to generate an electrical signal that is based upon the force exerted onto the trunnion due to the weight of the frame assembly and rail car. As previously described with reference to Fig. 3, the force exerted against the trunnion 24 is generally along the force vector F illustrated. The orientation of the force vector F is along the radius of the end ring 18, as previously described.

In the embodiment shown in Fig. 4, the weight gauge 58 of each trunnion 24 includes a pair of strain gauges 60, each of which is positioned on opposite sides of the wheel bracket 32 and in contact with the pivot pin 46. The strain gauge 60 includes a first end 62 mounted to a first support block 64 and a second end 66 supported by a second support block 68. A contact pin 70 formed on the pivot pin 46 contacts the strain gauge within a groove 72. Although only the single strain gauge 60 is shown in Fig. 4, an identical strain gauge is included in the trunnion 24 on the opposite side, as can be understood by reference to Fig. 5. As illustrated in Fig. 5, the strain gauge 60 rests upon a pad 74 including a locator 76. The locator 76 is received within a groove formed in the strain gauge to accurately locate the strain gauge, as illustrated.

Although various different types of strain gauges are contemplated as being within the scope of the present disclosure, the strain gauge shown in Figs. 4 and 5 is commercially available from Rice Lake. As is well known, when a force is applied to the strain gauge 60 between the first and second ends 62, 66, the strain gauge 60 generates an electrical signal that is directly proportional to the force being applied to the strain gauge 60. In the embodiment shown in Fig. 4, the pivot pin 46 is supported on the strain gauge 60 through the connection between the contact pin 70 and the groove 72 formed in the strain gauge. The pivot pin 46 is received within an opening in each of the support brackets 44 that is slightly larger than the diameter of the pivot pin 46. Thus, the entire weight of the wheel bracket 32, and thus the weight of the entire frame assembly of the rotary rail car dumper and the rail car is directed toward the strain gauge 60. The signal generated by the strain gauge 60 thus varies depending upon the amount of force exerted against the strain gauge 60 through the contact pin 70. The signal from the strain gauge 60 can thus be calibrated and used to determine the amount of weight being supported by the trunnion 24.

Referring back to Fig. 3, the body of the strain gauge 60 is mounted such that the longitudinal axis of the strain gauge 60 is perpendicular to the force vector F. Thus, the force vector F is directed toward the strain gauge 60 through the contact pin 70. Each of the trunnions 24 are configured similar to the trunnion 24 shown in Fig. 3 such that the pair of strain gauges on each of the trunnions 24 are positioned to detect the force F created by the weight of the frame assembly and rail car.

As described previously, the rotary rail car dumper of the present disclosure includes four separate trunnions. Specifically, two separate trunnions are positioned to support each of the end rings 18 positioned at opposite ends of the frame assembly. In the embodiment described in Fig. 4, each trunnion includes a pair of strain gauges such that each pair of strain gauges generates a combined electrical signal that corresponds to the force applied to the strain gauges 60 by the weight of the frame assembly and rail car.

Referring now to Fig. 6, thereshown is a simplified version of the weighing system of the present disclosure. The weighing system includes a control unit 78 that is positioned to receive electrical signals from each of the strain gauges 60 associated with each of the four trunnions 24. Although the embodiment shown in Figs. 5 and 6 include two strain gauges for each trunnion, the combined electrical signal received from each trunnion is directed to the control unit 78, as illustrated.

The control unit 78 is calibrated to calculate the weight supported by the four trunnions 24. Initially, when no rail car is present within the frame assembly, the electrical signals received at the control unit 78 from the four strain gauges 60 represents the weight of the frame assembly without a rail car. This weight is saved in memory of the control unit 78 for use when determining the weight of a loaded rail car.

When a loaded rail car 12 is driven onto the support rails 22, as illustrated in Fig. 2, the added weight of the rail car and its contents causes each of the strain gauges 60 to generate an electrical signal that varies depending upon the force exerted against the strain gauge. The control unit 78 is programmed to calculate the combined weight based on the signals sent by the four strain gauges 60. Once the combined weight has been determined, the control unit 78 subtracts the weight of the frame assembly alone to determine the combined weight of the rail car and its contents.

Once the weight of the rail car and its contents are known, the rotary rail car dumper operates to dump the contents of the rail car into the collection bin 14, as is well known. Once the rail car 12 has been emptied, the control unit 78 again determines the weight of the combination of the empty rail car and the frame assembly. The difference between the weight before dumping and after dumping is used to determine the weight of the contents that were dumped from the rail car 12. As illustrated in Fig. 6, a display 80 can be associated with the control unit 78 such that the weight of the contents is shown on the display 80.

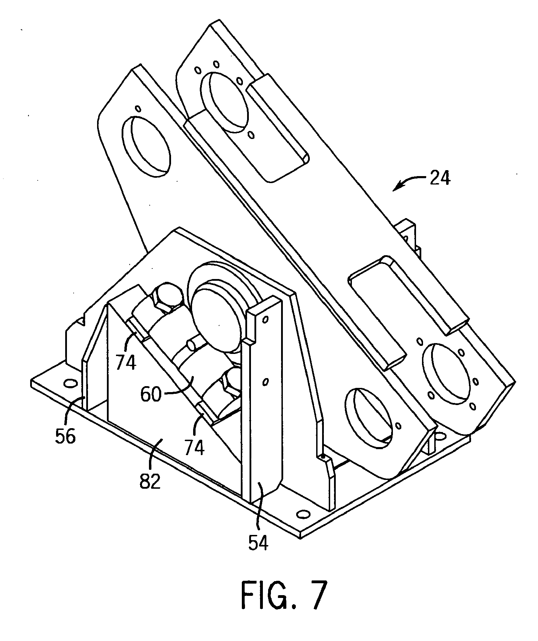

Referring now to Fig. 7, thereshown is an alternate contemplated embodiment for the trunnion 24. In the alternate embodiment, the strain gauge 60 is supported by a single block 82 that extends between the pair of braces 54, 56. In the embodiment shown in Fig. 7, the strain gauge 60 is again positioned perpendicular to the force vector created by the combined weight of the frame assembly and the rail car. The single block 82 shown in Fig. 7 supports the pair of pads 74 in a manner similar to that described with respect to the first embodiment of Fig. 4. In the second embodiment shown in Fig. 7, the strain gauge 60 functions in the same manner as previously described.

## Claims

1. A weighing system for determining the weight of a rail car (12) positioned within a rotary rail car dumper (10), comprising:
a rotatable frame assembly (16) having a pair of support rails (22) for receiving the rail car and a pair of rotatable end rings (18);
at least two trunnions (24) positioned to rotatably support each of the end rings (18); and
a weight gauge (58) mounted on each of the trunnions (24), wherein each of the weight gauges (58) is adapted to generate a signal corresponding to the force applied to the trunnions (24) by the combination of the rail car (12) and the rotatable frame assembly (16).

2. The weighing system of claim 1 wherein each of the trunnions (24) includes support wheels (26) mounted within a wheel bracket (32) that is rotatably mounted to a stationary support bracket (44) about a pivot pin (46).

3. The weighing system of claim 2 wherein the weight gauge (58) is a strain gauge (60) positioned in contact with the pivot pin (46).

4. The weighing system of claim 3 wherein the strain gauge (60) is adapted to generate an electric signal dependent upon the force applied to the strain gauge (60) by the pivot pin (46).

5. The weighing system of claim 1 wherein the at least two trunnions (24) each include one or more support wheels (26) mounted within a wheel bracket (32) rotatably mounted to a stationary support bracket (44) about a pivot pin (46).

6. The weighing system of claim 1 or claim 5 wherein the weight gauge (58) is a strain gauge (60) that is adapted to generate an electric signal having a value based on the force applied to the strain gauge (60).

7. The weighing system of claim 1 or claim 3 further comprising a control unit (78) in communication with each of the weight gauges (58) to combine the signals from the weight gauges (58) and determine the weight of the rail car (12).

8. The weighing system of claim 6 wherein the strain gauge (60) is positioned in contact with the pivot pin (46).

9. The weighing system of claim 3 or claim 8 wherein the pivot pin (46) is vertically movable relative to the stationary support bracket (44).

10. The weighing system of claim 3 or claim 6 wherein the strain gauge (60) is mounted perpendicular to the force applied to the trunnions (24) by the combination of the rail car (12) and the rotatable frame assembly (16).

11. A method of weighing a rail car (12) using a rotary rail car dumper (10) having a rotatable frame assembly (16) including a pair of rails (22) to support the rail car and a pair of end rings (18), comprising the steps of:
positioning at least a pair of trunnions (24) beneath each of the end rings (18) such that the trunnions (24) support the combined weight of the rotatable frame assembly (16) and the rail car (12);
mounting a weight gauge (58) on each of the trunnions (24), wherein each weight gauge is adapted to (58) generate a signal corresponding to the force applied to the trunnion (24) by the weight of the rotatable frame assembly (16) and the rail car (12);
receiving the signal from each of the weight gauges (58) in a control unit (78); and
operating the control unit (78) to determine the weight of the rail car (12) based upon the signals received from the weight gauges (58).

12. The method of claim 11 wherein each of the weight gauges (58) is a strain gauge (60).

13. The method of claim 12 wherein each of the strain gauges (60) are positioned beneath a pivot pin (46) included in each of the trunnions (24).

14. The method of claim 11 wherein the signal generated by each of the weight gauges (58) is directly proportional to the force applied to the trunnion (24) due to the weight of the rail car (12) and the rotatable frame assembly (16).

15. The method of claim 14 wherein the control unit (78) determines the weight of the rail car (12) based upon the signals received from the weight gauges (58) minus a predetermined weight of the rotatable frame assembly (16).

## Patentansprüche

1. Wiegesystem zum Bestimmen des Gewichts eines innerhalb eines drehbaren Eisenbahnwagenkippers (10) positionierten Eisenbahnwagens (12), wobei das System Folgendes umfasst:
eine drehbare Rahmeneinheit (16) mit einem Paar Stützschienen (22) zum Aufnehmen des Eisenbahnwagens und mit einem Paar drehbarer Endringe (18);
mindestens zwei Drehzapfen (24), die so positioniert sind, dass sie jeden der Endringe (18) drehbar abstützen; und
eine Gewichtsanzeige (58), die an jedem der Drehzapfen (24) montiert ist, wobei jede der Gewichtsanzeigen (58) so ausgeführt ist, dass sie ein Signal erzeugt, das der Kraft entspricht, die gemeinsam vom Eisenbahnwagen (12) und von der drehbaren Rahmeneinheit (16) auf die Drehzapfen (24) ausgeübt wird.

2. Wiegesystem nach Anspruch 1, bei dem jeder der Drehzapfen (24) Stützräder (26) beinhaltet, die innerhalb einer Radkonsole (32) montiert sind, die an einer stationären Stützkonsole (44) um einen Drehbolzen (46) drehbar montiert ist.

3. Wiegesystem nach Anspruch 2, bei dem die Gewichtsanzeige (58) ein Dehnungsmesser (60) ist, der in Kontakt mit dem Drehbolzen (46) positioniert ist.

4. Wiegesystem nach Anspruch 3, bei dem der Dehnungsmesser (60) so ausgeführt ist, dass er, abhängig von der durch den Drehbolzen (46) auf den Dehnungsmesser (60) ausgeübten Kraft, ein elektrisches Signal erzeugt.

5. Wiegesystem nach Anspruch 1, bei dem die mindestens zwei Drehzapfen (24) jeweils ein oder mehrere Stützräder (26) beinhalten, die innerhalb einer Radkonsole (32) montiert sind, die an einer stationären Stützkonsole (44) um einen Drehbolzen (46) drehbar montiert ist.

6. Wiegesystem nach Anspruch 1 oder Anspruch 5, bei dem die Gewichtsanzeige (58) ein Dehnungsmesser (60) ist, der so ausgeführt ist, dass er ein elektrisches Signal mit einem Wert erzeugt, der auf der auf den Dehnungsmesser (60) ausgeübten Kraft basiert.

7. Wiegesystem nach Anspruch 1 oder Anspruch 3, das weiterhin eine Kontrolleinheit (78) umfasst, die in Kommunikation mit jedem der Gewichtsanzeigen (58) steht, um die Signale von den Gewichtsanzeigen (58) zu kombinieren und das Gewicht des Eisenbahnwagens (12) zu bestimmen.

8. Wiegesystem nach Anspruch 6, bei dem der Dehnungsmesser (60) in Kontakt mit dem Drehbolzen (46) positioniert ist.

9. Wiegesystem nach Anspruch 3 oder Anspruch 8, bei dem der Drehbolzen (46) im Verhältnis zur stationären Stützkonsole (44) vertikal beweglich ist.

10. Wiegesystem nach Anspruch 3 oder Anspruch 6, bei dem der Dehnungsmesser (60) senkrecht zu der Kraft montiert ist, die durch die Kombination des Eisenbahnwagens (12) und der drehbaren Rahmeneinheit (16) auf die Drehzapfen (24) ausgeübt wird.

11. Verfahren zum Wiegen eines Eisenbahnwagens (12) unter Verwendung eines drehbaren Eisenbahnwagenkippers (10) mit einer drehbaren Rahmeneinheit (16) mit einem Paar Schienen (22), um den Eisenbahnwagen und ein Paar Endringe (18) abzustützen, wobei das Verfahren die folgenden Schritte umfasst:
Positionieren von mindestens einem Paar Drehzapfen (24) unterhalb eines jeden der Endringe (18), so dass die Drehzapfen (24) das kombinierte Gewicht der drehbaren Rahmeneinheit (16) und des Eisenbahnwagens (12) abstützen;
Montieren einer Gewichtsanzeige (58) an jedem der Drehzapfen (24), wobei jede Gewichtsanzeige (58) so ausgeführt ist, dass sie ein Signal erzeugt, das der Kraft entspricht, die durch das Gewicht der drehbaren Rahmeneinheit (16) und des Eisenbahnwagens (12) auf den Drehzapfen (24) ausgeübt wird;
Empfangen des Signals von jeder der Gewichtsanzeigen (58) in einer Kontrolleinheit (78); und
Betreiben der Kontrolleinheit (78), um das Gewicht des Eisenbahnwagens (12) auf der Basis der von den Gewichtsanzeigen (58) empfangenen Signale zu bestimmen.

12. Verfahren nach Anspruch 11, bei dem jede der Gewichtsanzeigen (58) ein Dehnungsmesser (60) ist.

13. Verfahren nach Anspruch 12, bei dem jeder der Dehnungsmesser (60) unterhalb eines in jedem der Drehzapfen (24) enthaltenen Drehbolzens (46) positioniert ist.

14. Verfahren nach Anspruch 11, bei dem das von jedem der Gewichtsanzeigen (58) erzeugte Signal direkt proportional zu der Kraft ist, die aufgrund des Gewichts des Eisenbahnwagens (12) und der drehbaren Rahmeneinheit (16) auf den Drehzapfen (24) ausgeübt wird.

15. Verfahren nach Anspruch 14, bei dem die Kontrolleinheit (78) das Gewicht des Eisenbahnwagens (12) auf der Basis der von den Gewichtsanzeigen (58) empfangenen Signale, abzüglich eines vorbestimmten Gewichts der drehbaren Rahmeneinheit (16), bestimmt.

## Revendications

1. Système de pesée pour déterminer le poids d'un wagon de chemin de fer (12) positionné à l'intérieur d'une benne de wagon de chemin de fer rotative (10), comprenant :
un ensemble de cadre pouvant tourner (16) ayant une paire de rails de support (22) pour recevoir le wagon de chemin de fer et une paire d'anneaux d'extrémité pouvant tourner (18) ;
au moins deux tourillons (24) positionnés de façon à supporter de façon pivotante chacun des anneaux d'extrémité (18) ; et
une jauge de poids (58) fixée sur chacun des tourillons (24), chacune des jauges de poids (58) étant conçue pour générer un signal correspondant à la force appliquée aux tourillons (24) par la combinaison du wagon de chemin de fer (12) et de l'ensemble de cadre pouvant tourner (16).

2. Système de pesée selon la revendication 1, dans lequel chacun des tourillons (24) comprend des roues de support (26) fixées à l'intérieur d'une fixation de roue (32) fixée en rotation à une fixation de support stationnaire (44) tournant autour d'une broche pivotante (46).

3. Système de pesée selon la revendication 2, dans lequel la jauge de poids (58) est un extensomètre (60) positionné en contact avec la broche pivotante (46).

4. Système de pesée selon la revendication 3, dans lequel l'extensomètre (60) est conçu pour générer un signal électrique dépendant de la force appliquée à l'extensomètre (60) par la broche pivotante (46).

5. Système de pesée selon la revendication 1, dans lequel les au moins deux tourillons (24) comprennent chacun une ou plusieurs roues de support (26) fixées à l'intérieur d'une fixation de roue (32) fixée en rotation à la fixation de support stationnaire (44) tournant autour d'une broche pivotante (46).

6. Système de pesée selon la revendication 1 ou 5, dans lequel la jauge de poids (58) est un extensomètre (60) conçu pour générer un signal électrique ayant une valeur basée sur la force appliquée à l'extensomètre (60).

7. Système de pesée selon la revendication 1 ou 3, comprenant en outre une unité de commande (78) en communication avec chacune des jauges de poids (58) pour combiner les signaux provenant des jauges de poids (58) et déterminer le poids du wagon de chemin de fer (12).

8. Système de pesée selon la revendication 6, dans lequel l'extensomètre (60) est positionné en contact avec la broche pivotante (46).

9. Système de pesée selon la revendication 3 ou 8, dans lequel la broche pivotante (46) est mobile dans le plan vertical par rapport à la fixation de support stationnaire (44).

10. Système de pesée selon la revendication 3 ou 6, dans lequel l'extensomètre (60) est fixé perpendiculairement à la force appliquée aux tourillons (24) par la combinaison du wagon de chemin de fer (12) et de l'ensemble de cadre pouvant tourner (16).

11. Procédé de pesée d'un wagon de chemin de fer (12) utilisant une benne de wagon de chemin de fer rotative (10) ayant un ensemble de cadre pouvant tourner (16) comprenant une paire de rails (22) pour supporter le wagon de chemin de fer et une paire d'anneaux d'extrémité (18), comprenant les étapes consistant à :
positionner au moins une paire de tourillons (24) sous chacun des anneaux d'extrémité (18) de telle sorte que les tourillons (24) supportent le poids combiné de l'ensemble de cadre pouvant tourner (16) et du wagon de chemin de fer (12) ;
fixer une jauge de poids (58) sur chacun des tourillons (24), chaque jauge de poids (58) étant conçue pour générer un signal correspondant à la force appliquée au tourillon (24) par le poids de l'ensemble de cadre pouvant tourner (16) et du wagon de chemin de fer (12) ;
recevoir le signal provenant de chacune des jauges de poids (58) dans une unité de commande (78) ; et
actionner l'unité de commande (78) pour déterminer le poids du wagon de chemin de fer (12) sur la base des signaux reçus des jauges de poids (58).

12. Procédé selon la revendication 11, dans lequel chacune des jauges de poids (58) est un extensomètre (60).

13. Procédé selon la revendication 12, dans lequel chacun des extensomètres (60) est positionné sous une broche pivotante (46) comprise dans chacun des tourillons (24).

14. Procédé selon la revendication 11, dans lequel le signal généré par chacune des jauges de poids (58) est directement proportionnel à la force appliquée au tourillon (24) du fait du poids du wagon de chemin de fer (12) et de l'ensemble de cadre pouvant tourner (16).

15. Procédé selon la revendication 14, dans lequel l'unité de commande (78) détermine le poids du wagon de chemin de fer (12) sur la base des signaux reçus des jauges de poids (58) auquel on soustrait un poids prédéterminé correspondant à l'ensemble de cadre pouvant tourner (16).
